(19) Europäisches Patentamt
European Patent Office
Office européen des brevets

(11) **EP 3 278 440 B1**

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(51) Int Cl.:
*H02M 7/00* (2006.01)        *H02M 7/48* (2007.01)
*H02M 7/537* (2006.01)      *H02M 7/5387* (2007.01)

(21) Anmeldenummer: **16702396.9**

(22) Anmeldetag: **29.01.2016**

(86) Internationale Anmeldenummer:
**PCT/EP2016/051889**

(87) Internationale Veröffentlichungsnummer:
**WO 2016/155908 (06.10.2016 Gazette 2016/40)**

(54) **PULSWECHSELRICHTER**

INVERTER

CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2015 DE 102015205881**

(43) Veröffentlichungstag der Anmeldung:
**07.02.2018 Patentblatt 2018/06**

(73) Patentinhaber: **Robert Bosch GmbH**
**70442 Stuttgart (DE)**

(72) Erfinder: **BURGER, Dennis**
**71292 Friolzheim (DE)**

(56) Entgegenhaltungen:
EP-A1- 2 824 815          US-A1- 2011 094 075
US-A1- 2011 292 686     US-A1- 2012 229 948

• **FANG LUO ET AL: "Design of a Hybrid Busbar Filter Combining a Transmission-Line Busbar Filter and a One-Turn Inductor for DC-Fed Three-Phase Motor Drive Systems", IEEE TRANSACTIONS ON POWER ELECTRONICS, INSTITUTE OF ELECTRICAL AND ELECTRONICS ENGINEERS, USA, Bd. 28, Nr. 12, 1. Dezember 2013 (2013-12-01), Seiten 5588-5602, XP011514328, ISSN: 0885-8993, DOI: 10.1109/TPEL.2013.2244913**

**Beschreibung**

Die Erfindung betrifft einen Pulswechselrichter mit minimierter elektromagnetischer Störemission.

Stand der Technik

Obwohl die vorliegende Erfindung und die ihr zugrundeliegende Problematik anhand eines Elektrofahrzeugs mit einem Pulswechselrichter erläutert wird, ist sie auch auf beliebige andere elektrische Antriebssysteme mit getakteten leistungselektrischen Wechselrichtern anwendbar.

In einem elektrischen Antriebssystem eines Elektrofahrzeugs oder eines Hybridelektrofahrzeugs erfolgt die Einspeisung einer mehrphasigen Spannung in eine elektrische Maschine üblicherweise durch einen Wechselrichter, beispielsweise in Form eines Pulswechselrichters. Dazu kann eine Energiespeichereinrichtung wie etwa eine Hochvoltbatterie einen Gleichspannungszwischenkreis speisen, der seinerseits eine Gleichspannung bereitstellt, die zur Versorgung der elektrischen Maschine in eine mehrphasige Wechselspannung, beispielsweise eine dreiphasige Wechselspannung, umgerichtet werden kann.

Herkömmliche Pulswechselrichter (PWR) umfassen hierzu typischerweise zumindest drei grundlegende Bausteine. Eingangsseitig wird typischerweise ein Zwischenkreiskondensator zum Einkoppeln einer Gleichspannung in den Gleichspannungszwischenkreis verwendet. Der Zwischenkreiskondensator wird über eine niederinduktive elektrische Verbindung, z.B. in Form zweier Busbars aus Kupfer, mit einem oder mehreren Leistungsmodulen verbunden. Dabei kann die mit einem ersten Ausgangsanschluss des Gleichspannungszwischenkreises verbundene Busbar als High-Side-Busbar und die mit einem zweiten Ausgangsanschluss des Gleichspannungszwischenkreises verbundene Busbar als Low-Side-Busbar bezeichnet werden. Ein Leistungsmodul wird zur Erzeugung einer dreiphasigen Ausgangsspannung typischerweise mit drei Brückenzweigen mit je zwei Halbleiterschaltern ausgeführt. Entsprechend werden die mit der High-Side-Busbar verbundenen Halbleiterschalter der Brückenzweige jeweils als High-Side-Schalter und die mit der Low-Side-Busbar verbundenen Halbleiterschalter der Brückenzweige jeweils als Low-Side-Schalter bezeichnet. Als Halbleiterschalter können dabei beispielsweise IGBT-Module (Bipolartransistoren mit isolierter Gate-Elektrode) mit antiparallel geschalteter Diode oder MOSFETs (Metall-Oxid-Halbleiter-Feldeffekttransistoren) oder dergleichen verwendet werden. Das Leistungsmodul arbeitet üblicherweise mit pulsweitenmodulierten Ansteuersignalen für die Halbleiterschalter um die mehrphasige Ausgangsspannung zu erzeugen.

Alle drei Bauteile eines Pulswechselrichters, d.h. der Zwischenkreiskondensator, die elektrische Verbindung über Busbars und das Leistungsmodul, besitzen neben ihren gewünschten elektrischen Eigenschaften auch ungewünschte Streugrößen, d.h. Streukapazitäten und Streuinduktivitäten. Durch die Taktung der einzelnen Halbbrücken in dem Umrichter werden aufgrund der Streugrößen transiente elektrische Störgrößen erzeugt, die sich in dem System ausbreiten können. In der Folge kann es durch diese unerwünschten Auskopplungen unter anderem zu leitungsgebundenen Störemissionen in das speisende Gleichspannungsnetz des Wechselrichters kommen. Diese leitungsgebundenen Störemissionen können jedoch möglichst klein gehalten werden, indem alle Teilkomponenten des Systems für sich bezüglich der Streugrößen symmetrisch zwischen High-Side und Low-Side gestaltet werden. Eine Herausforderung hierbei ist insbesondere die symmetrische Gestaltung der Leistungsmodule hinsichtlich ihrer Streugrößen.

Aus der EP 2824815 A1 ist ein Leistungswandler bekannt, welcher zur Unterdrückung elektromagnetischer Störungen ausgebildet ist. Fang Luo et al., "Design of a Hybrid Busbar Filter Combining a Transmission-Line Busbar Filter and a One-Turn Inductor for DC-Fed Three-Phase Motor Drive Systems", IEEE Transactions on Power Electronics, Institute of Electrical and Electronics Engineers, USA, Bd. 28, Nr. 12, 2013 behandelt Elektromagnetische-Verträglichkeit (EMV)- Filter zur Unterdrückung von EMV-Störsignalen in Leistungswandlern. Weiter ist aus der US 2012/229948 A1 ein Folienkondensator bekannt. Aus den Druckschriften US 2011/292686 A1 und US 2011/094075 A1 sind in Leistungswandlern verwendete Kondensatorschaltungen bekannt.

Die Druckschrift Domurat-Line A., Hoene E. "Analysis and Reduction of Radiated EMI of Power Modules", 7th International Integrated Power Electronics Systems Conference (CIPS), 2012 offenbart beispielsweise Leistungsmodule, welche auf Basis einer Flip-Chip-Technologie gestaltet sind, bei der die Low-Side-Schalter "über Kopf" aufgelötet werden. Diese Flip-Chip-Technologie ist für Prototypen gut umsetzbar, jedoch ist eine Serienanfertigung mit großen Stückzahlen auf Basis von handelsüblichen IGBT-Modulen schwierig.

Demnach bedarf es eines einfacheren alternativen Konzeptes zur Minimierung der leistungsgebundenen Störemissionen von getakteten leistungselektrischen Wechselrichtern.

Offenbarung der Erfindung

Die vorliegende Erfindung schafft gemäß einem Aspekt einen Pulswechselrichter mit den Merkmalen des Patentanspruchs 1. Der Pulswechselrichter umfasst eine Eingangsschaltung, welche dazu ausgelegt ist, eine Eingangsgleichspannung zwischen einem High-Side-Eingang und einem Low-Side-Eingang bereitzustellen. Die Eingangsschaltung weist eine erste High-Side-Streukapazität, eine erste Low-Side-Streukapazität, eine erste High-Side-Streuinduktivität und eine erste Low-Side-Streuinduktivität auf. Der Pulswechselrichter umfasst ferner eine Busbar-Anordnung, welche dazu ausgelegt ist, den High-Side-Eingang elektrisch mit einem High-Side-Anschluss zu verbinden und den Low-Side-Eingang elektrisch mit einem Low-Side-Anschluss zu verbinden. Die Busbar-Anordnung weist eine zweite High-Side-Streukapazität, eine zweite Low-Side-Streukapazität, eine zweite High-Side-Streuinduktivität und eine zweite Low-Side-Streuinduktivität auf. Der Pulswechselrichter umfasst ferner ein n-phasiges Wechselrichtermodul, n>1, welches mit dem High-Side-Anschluss und dem Low-Side-Anschluss elektrisch gekoppelt ist und dazu ausgelegt ist, die Eingangsgleichspannung in eine n-phasige Ausgangswechselspannung umzusetzen. Das Wechselrichtermodul weist eine dritte High-Side-Streukapazität, eine dritte Low-Side-Streukapazität, eine dritte High-Side-Streuinduktivität und eine dritte Low-Side-Streuinduktivität auf. Die Summe der ersten, der zweiten und der dritten High-Side-Streukapazität ist im Wesentlichen gleich der Summe der ersten, der zweiten und der dritten Low-Side-Streukapazität ist. Ferner ist die Summe der ersten, der zweiten und der dritten High-Side-Streuinduktivität im Wesentlichen gleich der Summe der ersten, der zweiten und der dritten Low-Side-Streuinduktivität. Die Differenz mindestens einer der ersten, zweiten oder dritten High-Side-Streukapazität zu der entsprechenden Low-Side-Streukapazität ist ungleich Null und/oder die Differenz mindestens einer der ersten, zweiten oder dritten High-Side-Streuinduktivität zu der entsprechenden Low-Side-Streuinduktivität ist ungleich Null.

Die vorliegende Erfindung schafft gemäß einem weiteren Aspekt eine n-phasige elektrische Maschine, wobei n > 1, welche einen erfindungsgemäßen Pulswechselrichter aufweist. Die n-phasige elektrische Maschine ist mit der n-phasigen Ausgangswechselspannung des Pulswechselrichters gekoppelt.

Bevorzugte Ausführungsformen sind Gegenstand der geänderten Unteransprüche.


Vorteile der Erfindung


Es ist eine Idee der vorliegenden Erfindung, einen Pulswechselrichter mit minimaler (Gleichtakt-)Störemission zu schaffen, in welchem die Teilkomponenten jeweils für sich hinsichtlich ihrer Streugrößen, d.h. Streukapazitäten und Streuinduktivitäten, nicht symmetrisch gestaltet werden müssen. Symmetrie bedeutet in diesem Zusammenhang, dass die Streugrößen der Bauteile auf der High-Side im Wesentlichen denen auf der Low-Side entsprechen, d.h. die Bauteile symmetrisch zwischen High- und Low-Side in Bezug auf ihre Streugrößen sind. Asymmetrien in den Teilkomponenten führen für gewöhnlich zu erhöhten Gleichtaktstöremissionen. Der Grund hierfür liegt darin, dass die Kommutierungskreisströme des Systems durch die Asymmetrien eine "Gegentakt-Gleichtakt-Umwandlung" erfahren.

Auch wenn Zwischenkreiskondensatoren und Busbars (d.h. Stromschienen) mit relativ geringem Aufwand symmetrisch ausgebildet werden können, stellt speziell die symmetrische Ausgestaltung eines Wechselrichter-Leistungsmoduls eine Herausforderung dar. In der vorliegenden Erfindung wird diese Problematik gewissermaßen umgangen. Der vorliegenden Erfindung liegt die Erkenntnis zugrunde, dass vorhandene Asymmetrien in Teilkomponenten durch "entgegengesetzte" Asymmetrien in anderen Teilkomponenten des Systems kompensiert werden können. In diesem Sinne wird das System nicht auf der Ebene der Teilkomponenten symmetrisch gestaltet, sondern es findet eine Symmetrisierung auf Kommutierungskreisebene statt. So kann eine nur mit aufwendigen Mitteln zu vermeidende Asymmetrie in einem Wechselrichter-Leistungsmodul durch entsprechend bewusst gewählte entgegengesetzte Asymmetrien in der Eingangsschaltung oder der Busbar-Anordnung ausgeglichen werden. Die Eingangsschaltung und/oder die Busbar-Anordnung können jeweils aufbauend auf der konkreten Ausgestaltung des Leistungsmoduls entsprechend angepasst und optimiert werden.

Störemissionen können erfolgreich unterdrückt werden, solange die Streugrößen kumuliert über alle Bauteile des Zwischenkreises symmetrisiert werden. Konkret müssen hierzu die folgenden Gleichungen zumindest näherungsweise erfüllt sein:

$$\sum C_{HS} = \sum C_{LS} \quad \text{und} \quad \sum L_{HS} = \sum L_{LS},$$

wobei HS die High-Side, LS die Low-Side, $\sum C$ die Summe über alle Einzelstreukapazitäten und $\sum L$ die Summe über alle Einzelstreuinduktivitäten bezeichnen. Die Summe der Einzelstreukapazitäten auf der High-Side muss also im Wesentlichen gleich der Summe der Einzelstreukapazitäten auf der Low-Side sein. Ebenso muss die Summe der Einzelstreuinduktivtäten auf der High-Side im Wesentlichen gleich der Summe der Einzelstreuinduktivtäten auf der Low-Side sein.

Die erfindungsgemäße Lösung hat den erheblichen Vorteil, dass unter anderem kostengünstige, asymmetrische Leistungsmodule für einen Pulswechselrichter verwendbar sind, ohne dass verstärkt leistungsgebundene Störemissionen auftreten. In der Folge bedarf es zur Erfüllung der entsprechenden Grenzwerte für die Elektromagnetische Verträglichkeit (EMV) weniger Aufwand hinsichtlich Filtern etc. Demnach ist das erfindungsgemäße System nicht nur kostengünstig, sondern zeichnet sich auch durch einen hohen Wirkungsgrad und eine bessere Energiebilanz aus, da die Verlustleistung minimal gehalten werden kann. Erfindungsgemäße Pulswechselrichter lassen sich in vielfältigen Anwendungsgebieten von elektrischen Maschinen einsetzen. Neben Elektro- und Hybridelektrofahrzeugen können diese beispielsweise auch in wechselrichtergespeisten Industrieantrieben oder dergleichen genutzt werden.

Gemäß einer Weiterbildung kann die Eingangsschaltung einen Zwischenkreiskondensator umfassen. Der Zwischenkreiskondensator kann die Eingangsgleichspannung zwischen dem High-Side-Eingang und dem Low-Side-Eingang bereitstellen. In einer besonders einfachen Weiterbildung kann die Eingangsschaltung lediglich aus dem Zwischenkreiskondensator bestehen, welcher die Eingangsspannung beispielsweise von einer Energiespeichereinrichtung wie einer Hochvoltbatterie empfängt und für den Wechselrichter bereitstellt.

Der Zwischenkreiskondensator kann als Folienkondensator ausgebildet sein. In diesem Fall weist der Kondensator als Dielektrikum sehr dünne, isolierende Kunststofffolien auf, die metallisiert oder mit Metallfolien belegt sind und sehr eng gewickelt oder übereinander geschichtet sind.

Die Busbar-Anordnung kann weiterhin platzsparend in den Zwischenkreiskondensator integriert sein.

Gemäß einer Weiterbildung kann die Busbar-Anordnung einen High-Side-Busbar und einen Low-Side-Busbar umfassen. Der High-Side-Busbar kann den High-Side-Eingang elektrisch mit dem High-Side-Anschluss verbinden. Der Low-Side-Busbar kann den Low-Side-Eingang elektrisch mit dem Low-Side-Anschluss verbinden. In einer besonders einfach ausgebildeten Ausführung können also folglich zwei Busbars, d.h. zwei Sammelschienen, beispielsweise aus Kupfer oder einem ähnlichen geeigneten Material die Eingangsschaltung mit dem Wechselrichtermodul verbinden.

Gemäß einer Weiterbildung kann das n-phasige Wechselrichtermodul für jede Phase einen Brückenzweig aus jeweils einem High-Side-Leistungshalbleiterschalter und einem Low-Side-Leistungshalbleiterschalter aufweisen. Diese Weiterbildung ist eine mögliche einfache und einfach zu steuernde Form der Ausgestaltung eines Wechselrichtermoduls.

Die Leistungshalbleiterschalter können jeweils MOSFET-Schalter oder IGBT-Schalter oder dergleichen aufweisen. Ein Leistungshalbleiterschalter enthält somit vorteilhafterweise eine oder mehrere aktiv schaltbare Halbleiterkomponenten, wie sie in miniaturisierter Form in großer Anzahl in einem einzelnen Halbleitersubstrat integrierbar sind. Dies kann ein MOSFET (Metall-Oxid-Halbleiter-Feldeffekttransistor) und/oder ein IGBT (Bipolartransistor mit isolierter Gate-Elektrode) bzw. ein anderer geeignete Halbleiterschalter sein.

Gemäß einer Weiterbildung kann die Differenz der ersten High-Side-Streukapazität und der ersten Low-Side-Streukapazität und/oder die Differenz der zweiten High-Side-Streukapazität und der zweiten Low-Side-Streukapazität ein entgegengesetztes Vorzeichen zu der Differenz der dritten High-Side-Streukapazität und der dritten Low-Side-Streukapazität aufweisen. In dieser Weiterbildung wird also konkret eine Asymmetrie des Wechselrichtermoduls ausgeglichen, indem die Eingangsschaltung und/oder die Busbar-Anordnung mit einer entsprechend entgegengesetzten Asymmetrie ausgestaltet werden.

Gemäß einer Weiterbildung kann die Differenz der ersten High-Side-Streuinduktivität und der ersten Low-Side-Streuinduktivität und/oder die Differenz der zweiten High-Side- Streuinduktivität und der zweiten Low-Side-Streuinduktivität ein entgegengesetztes Vorzeichen zu der Differenz der dritten High-Side- Streuinduktivität und der dritten Low-Side- Streuinduktivität aufweisen. Hieraus ergeben sich Vorteile entsprechend zu der obigen Ausbildung.

Kurze Beschreibung der Zeichnungen

Weitere Merkmale und Vorteile der vorliegenden Erfindung werden nachfolgend anhand von Ausführungsformen mit Bezug auf die Figuren erläutert.

Es zeigen:

Fig. 1     eine schematische Darstellung einer elektrischen Maschine mit einem Pulswechselrichter gemäß einer Ausführungsform der Erfindung; und

Fig. 2     eine schematische Detaildarstellung eines Zwischenkreiskondensators mit integrierter Busbar eines Pulswechselrichters gemäß einer weiteren Ausführungsform der Erfindung.

Ausführungsformen der Erfindung

In den Figuren bezeichnen gleiche Bezugszeichen gleiche bzw. funktionsgleiche Elemente.

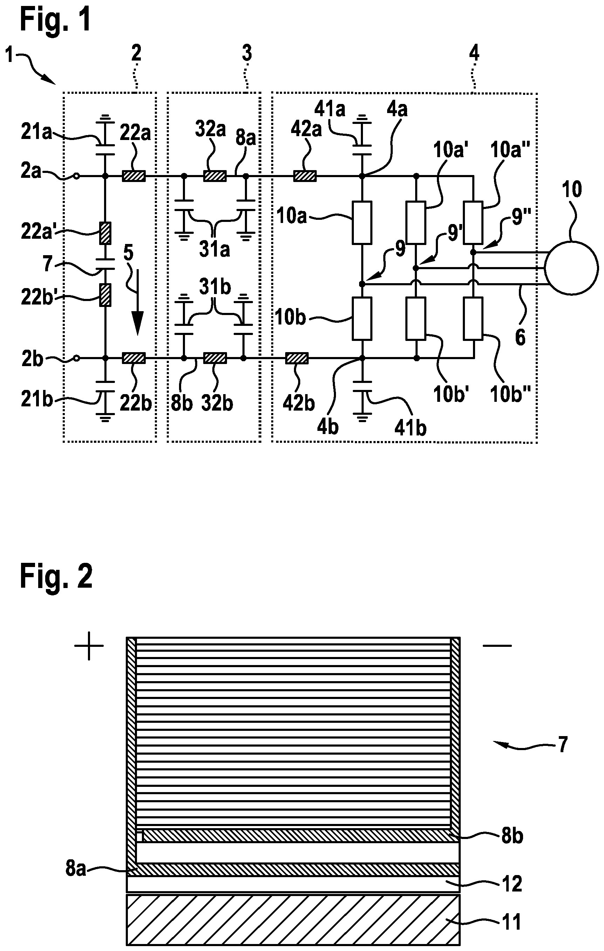

Fig. 1 zeigt eine schematische Darstellung einer elektrischen Maschine mit einem Pulswechselrichter gemäß einer Ausführungsform der Erfindung.

In Fig. 1 bezeichnet das Bezugszeichen 1 einen Pulswechselrichter. Der Pulswechselrichter 1 ist mit einer elektrischen Maschine 10 verbunden und dazu ausgebildet, diese mit einer dreiphasigen Wechselspannung (Ausgangswechselspannung 6) zu versorgen. Beispielsweise kann die elektrische Maschine 10 eine Synchron- oder Asynchronmaschine eines elektrisch betriebenen Fahrzeugs wie etwa eines Elektroautos oder eines Hybridelektrofahrzeugs sein.

Es kann dabei jedoch auch möglich sein, die elektrische Maschine 10 der Fig. 1 in stationären Systemen einzusetzen, beispielsweise in Industrieantrieben, in Kraftwerken, in elektrischen Energiegewinnungsanlagen, in Energiespeicheranlagen oder ähnlichen Systemen. Eine weitere Einsatzmöglichkeit der elektrischen Maschine 10 der Fig. 1 sind allgemeine Personen- oder Nutzfahrzeuge, beispielsweise auch Schiffe oder dergleichen. Die dreiphasige Ausgestaltung der elektrischen Maschine 10 sowie des Pulswechselrichters 1 ist hierbei rein beispielhaft zu sehen. Ebenso kann die Erfindung allgemein auf n-phasige Systeme angewendet werden, wobei n eine positive ganze Zahl ist.

Fig. 1 stellt hierbei schematisch ein Ersatzschaltbild eines Kommutierungskreises des Pulswechselrichters 1 dar. Dieser kann prinzipiell in eine Eingangsschaltung 2, eine Busbar-Anordnung 3 und ein dreiphasiges (bzw. allgemein ein n-phasiges) Wechselrichtermodul 4 eingeteilt werden.

Die Eingangsschaltung 2 ist dazu ausgelegt, eine Eingangsgleichspannung 5 zwischen einem High-Side-Eingang 2a und einem Low-Side-Eingang 2b bereitzustellen. Beispielsweise können die beiden Eingänge von einer Hochvoltbatterie, einer Traktionsbatterie oder einer entsprechenden Gleichspannungsquelle gespeist werden. Hierbei ist diese Ausführung nicht auf bestimmte Spannungslagen beschränkt. In dieser einfachen Ausführung besteht die Eingangsschaltung 2 effektiv nur aus einem einzelnen Zwischenkreiskondensator 7. Dieser kann beispielsweise als Folienkondensator oder dergleichen ausgebildet sein. Eine beispielhafte Ausführung des Zwischenkreiskondensators 7 ist in Fig. 2 gezeigt und wird weiter unten detaillierter erläutert.

Die Busbar-Anordnung 3 ist dazu ausgelegt, den High-Side-Eingang 2a elektrisch mit einem High-Side-Anschluss 4a zu verbinden und entsprechend den Low-Side-Eingang 2b elektrisch mit einem Low-Side-Anschluss 4b zu verbinden. In dieser Ausführung umfasst die Busbar-Anordnung 3 zwei Sammelschienen aus Kupfer oder Aluminium oder dergleichen, einer High-Side-Busbar 8a und einer Low-Side-Busbar 8b. Die High-Side-Busbar 8a verbindet hierbei den High-Side-Eingang 2a direkt mit dem High-Side-Anschluss 4a. Entsprechend verbindet die Low-Side-Busbar 8b den Low-Side-Eingang 2b direkt mit dem Low-Side-Anschluss 4b.

Das Wechselrichtermodul 4 ist wiederum mit dem High-Side-Anschluss 4a und dem Low-Side-Anschluss 4b elektrisch gekoppelt. Dementsprechend empfängt das Wechselrichtermodul 4 die Eingangsgleichspannung 5 an diesen Anschlüssen. Das Wechselrichtermodul 4 ist dazu ausgebildet, die Eingangsgleichspannung 5 in eine dreiphasige Ausgangsgleichspannung 6 umzusetzen, welche wiederum die elektrische Maschine 10 speist. Das Wechselrichtermodul 4 umfasst drei Brückenzweige 9, 9', 9'' mit jeweils zwei Leistungshalbleiterschaltern 10a, 10a', 10a'', 10b, 10b', 10b''. Der erste Brückenzweig 9 umfasst beispielsweise die Halbleiterschalter 10a und 10b, der zweite Brückenzweig 9' beispielsweise die Halbleiterschalter 10a' und 10b' und der dritte Brückenzweig beispielsweise die Halbleiterschalter 10a'' und 10b''. Dabei werden die Halbleiterschalter 10a, 10a', 10a'' einer Brückenseite als High-Side-Schalter bezeichnet, und die Halbleiterschalter 10b, 10b', 10b'' der anderen Brückenseite als Low-Side-Schalter. Es sollte dabei klar sein, dass jede andere Anzahl von Brückenzweigen bzw. Phasen des Wechselrichtermoduls 4 ebenso möglich ist, und dass die Bezeichnung der Halbleiterschalter 10a bis 10b'' als High-Side- und Low-Side-Schalter nur beispielhaft gewählt ist.

In Figur 1 sind die Halbleiterschalter 10a bis 10b'' aus Gründen der Übersichtlichkeit nicht mit deren Schaltzeichen abgebildet, sondern lediglich als einfache Boxen. Die in Figur 1 dargestellten Halbleiterschalter 10a bis 10b'' können dabei beispielsweise Feldeffekttransistoren (FETs) aufweisen. In einer möglichen Ausführungsform sind die Halbleiterschalter jeweils IGBTs (Bipolartransistoren mit isolierter Gate-Elektrode), es ist jedoch ebenso möglich, andere Halbleiterschalter in entsprechender Form vorzusehen, zum Beispiel in Form von JFETs (Sperrschicht-Feldeffekttransistoren) oder MOSFETs (Metall-Oxid-Halbleiter-Feldeffekttransistoren). Wenn die Halbleiterschalter 10a bis 10b'' IGBT-Schalter aufweisen, kann es vorgesehen sein, zu jedem der IGBT-Schalter eine in Fig. 1 aus Gründen der Übersichtlichkeit nicht dargestellte Diode antiparallel zu schalten. Dem Fachmann wird hierbei klar sein, wie die entsprechenden Halbleiterschalter 10a bis 10b'' im Detail verschaltet sein können.

Prinzipiell kann der Pulswechselrichter 1 eine Steuerregelung aufweisen (hier nicht abgebildet), welche dazu ausgelegt sein kann, Schaltsignale zu erzeugen, welche ein schaltendes Ansteuern der Halbleiterschalter kodieren. Die Schaltsignale können dabei beispielsweise einen logisch niedrigen Pegel aufweisen, wenn die Halbleiterschalter geöffnet sein sollen, und einen logisch hohen Pegel, wenn die Halbleiterschalter geschlossen sein sollen. Mittels einer solchen Steuerregelung lassen sich die Halbleiterschalter 10a bis 10b'' so getaktet ein- und ausschalten, dass das Wechselrichtermodul 4 die Eingangsgleichspannung 5 in eine dreiphasige Ausgangswechselspannung 6 umsetzt. Hierzu verwendete Verfahren sind aus dem Stand der Technik bekannt, so dass hier nicht näher darauf eingegangen werden soll.

Alle gezeigten Komponenten des Pulswechselrichters 1, d.h. die Eingangsschaltung 2, die Busbar-Anordnung 3 und das Wechselrichtermodul 4, besitzen neben ihren gewünschten elektrischen Eigenschaften auch Streugrößen, d.h. insbesondere Streukapazitäten und Streuinduktivitäten. Dementsprechend ist in Fig. 1 für die Eingangsschaltung 2 eine erste High-Side-Streukapazität 21a, eine erste Low-Side-Streukapazität 21b, eine erste High-Side-Streuinduktivität 22a, 22a' und eine erste Low-Side-Streuinduktivität 22b, 22b' gezeigt. Hierbei ist in Fig. 1 jeweils für die erste High-Side-Streuinduktivität 22a, 22a' und die erste Low-Side-Streuinduktivität 22b, 22b' separat die äquivalente Serieninduktivität 22a', 22b' des Zwischenkreiskondensators 7 und eine Streuinduktivität 22a, 22b der Leitungen eingezeichnet. Entsprechend weist auch die Busbar-Anordnung 3 eine zweite High-Side-Streukapazität 31a, eine zweite Low-Side-Streukapazität 31b, eine zweite High-Side-Streuinduktivität 32a und eine zweite Low-Side-Streuinduktivität 32b auf.

Ebenso weist das Wechselrichtermodul 4 eine dritte High-Side-Streukapazität 41a, eine dritte Low-Side-Streukapazität 41b, eine dritte High-Side-Streuinduktivität 42a und eine dritte Low-Side-Streuinduktivität 42b auf.

Das Wechselrichtermodul 4 kann beispielsweise eine Asymmetrie zwischen den Streugrößen der High-Side und der Low-Side aufweisen, beispielsweise kann die dritte High-Side-Streukapazität 41a verschieden von der dritten Low-Side-Streukapazität 41b sein und/oder die dritte High-Side-Streuinduktivität 42a verschieden von der dritten Low-Side-Streuinduktivität 42b sein. Die genaue Form der Asymmetrie kann beispielsweise aus Messungen erhalten worden sein und/oder konstruktionsbedingt festgelegt oder bekannt sein, beispielsweise aus Simulationen oder dergleichen. Die Asymmetrien des Wechselrichtermoduls 4 bezüglich der Streugrößen können durch die spezifische Ausgestaltung der Eingangsschaltung 2 und der Busbar-Anordnung 3 und deren jeweiligen Streugrößen kompensiert werden. Dies bedeutet, dass die Asymmetrie in dem Wechselrichtermodul 4 durch eine gezielte "Gegen-Asymmetrie" in der Eingangsschaltung 2 und/oder der Busbar-Anordnung 3 aufgehoben wird. Der Pulswechselrichter 1 wird folglich als Gesamtsystem symmetrisch hinsichtlich der Streugrößen gestaltet und es werden nicht die Einzelkomponenten jeweils für sich symmetrisiert. Ein konkretes Ausführungsbeispiels wird untenstehend mit Bezug auf Fig. 2 erläutert.

Fig. 2 zeigt hierzu eine schematische Detaildarstellung eines Zwischenkreiskondensators 7 mit integrierter Busbar 8a, 8b eines Pulswechselrichters 1 gemäß einer weiteren Ausführungsform der Erfindung. Das Ersatzschaltbild dieser Ausführungsform kann prinzipiell unverändert von Fig. 1 entnommen werden.

Der in Fig. 2 abgebildete Zwischenkreiskondensator 7 kann ein Folienkondensator-Wickel sein. Durch die Wicklung wird effektiv eine Vielzahl von Einzelkondensatoren parallel geschaltet. An den Stirnflächen des Kondensatorwickels 7 links und rechts in Fig. 2 befinden sich zur Kontaktierung entsprechende Elektroden (durch ein Plus- bzw. Minuszeichen angedeutet), welche jeweils mit einer zugehörigen Busbar 8a, 8b verbunden sind. In dieser Ausführungsform ist die Busbar-Anordnung 3 folglich in den Zwischenkreiskondensator 7 integriert. Weiterhin ist in Fig. 2 eine Isolation 12 des Zwischenkreiskondensators 7 gegenüber Masse 11 eingezeichnet.

Beispielsweise weist das mit diesem Zwischenkreiskondensator 7 verbundene Wechselrichtermodul 4 eine Asymmetrie bezüglich der Streukapazität auf. In diesem Fall gibt es verschiedene Möglichkeiten, um den Zwischenkreiskondensator 7 so zu gestalten, dass die Asymmetrien des Wechselrichtermoduls 4 kompensiert werden. Für die Symmetrisierung der Streukapazitäten muss folgende Gleichung näherungsweise erfüllt sein:

$$C_{21a} + C_{31a} + C_{41a} = C_{21b} + C_{31b} + C_{41b},$$

während für die Symmetrisierung der Streuinduktivitäten folgende Gleichung näherungsweise erfüllt sein muss:

$$L_{22a} + L_{22a'} + L_{32a} + L_{42a} = L_{22b} + L_{22b'} + L_{32b} + L_{42b}.$$

Die Polarität des Zwischenkreiskondensators 7 kann so günstig hinsichtlich der Symmetrisierung gewählt werden, dass eine Asymmetrie des Zwischenkreiskondensators 7 der Asymmetrie des Wechselrichtermoduls 4 grundsätzlich entgegenwirkt, d.h. diese abgeschwächt und nicht verstärkt wird. Weiterhin kann die geometrische Auslegung des Zwischenkreiskondensators 7 entsprechend zur Feinabstimmung der Streukapazitäten verändert werden. Beispielsweise gilt überschlagsweise für die Streukapazität einer Busbar, welche durch eine Isolationsschicht gegenüber einer Massefläche getrennt ist:

$$C = \varepsilon_0 * \varepsilon_r * A/d,$$

wobei d die Dicke der Isolationsschicht, A die Kontaktfläche der Busbar, $\varepsilon_0$ die elektrische Feldkonstante sowie $\varepsilon_r$ die Dielektrizitätszahl bezeichnet. Dementsprechend führt eine Vergrößerung der Dicke d zu einer kleineren Streukapazität. Eine Vergrößerung der Dielektrizitätszahl führt hingegen zu einer größeren Streukapazität. Weiterhin kann die Streukapazität über die Geometrie der Busbars beeinflusst werde. Wird beispielsweise A verkleinert, z.B. indem Löcher oder dergleichen in den Busbars vorgesehen werden, so verringert sich dementsprechend die Streukapazität. Allgemein können also Asymmetrien in der Streukapazität oder der Streuinduktivität des Wechselrichtermoduls 4 durch Anpassung des internen Aufbaus des Zwischenkreiskondensator 7 oder der Geometrie der Busbar-Anordnung 3 ausgeglichen werden. Für die Streuinduktivitäten (Eigeninduktivitäten) der Bauteile sind im Wesentlichen die Leitungs-/Busbarlängen samt ihrer geometrischen Anordnung ausschlaggebend. Diese können gezielt verändert werden. Allerdings kann sich eine exakte Symmetrisierung typischerweise aufwendig und komplex gestalten. Neben einer empirischen Vorgehensweise mittels Messungen etc. kann deshalb je nach Anwendungsfall beispielsweise auf Simulationen zurückzugriffen werden.

**Patentansprüche**

1. Pulswechselrichter (1), mit

   einer Eingangsschaltung (2), welche dazu ausgelegt ist, eine Eingangsgleichspannung (5) zwischen einem High-Side-Eingang (2a) und einem Low-Side-Eingang (2b) bereitzustellen, wobei die Eingangsschaltung (2) eine erste High-Side-Streukapazität (21a), eine erste Low-Side-Streukapazität (21b), eine erste High-Side-Streuinduktivität (22a, 22a') und eine erste Low-Side-Streuinduktivität (22b, 22b') aufweist;

   einer Busbar-Anordnung (3), welche dazu ausgelegt ist, den High-Side-Eingang (2a) elektrisch mit einem High-Side-Anschluss (4a) zu verbinden und den Low-Side-Eingang (2b) elektrisch mit einem Low-Side-Anschluss (4b) zu verbinden, wobei die Busbar-Anordnung (3) eine zweite High-Side-Streukapazität (31a), eine zweite Low-Side-Streukapazität (31b), eine zweite High-Side-Streuinduktivität (32a) und eine zweite Low-Side-Streuinduktivität (32b) aufweist; und

   einem n-phasigen Wechselrichtermodul (4), n>1, welches mit dem High-Side-Anschluss (4a) und dem Low-Side-Anschluss (4b) elektrisch gekoppelt ist und dazu ausgelegt ist, die Eingangsgleichspannung (5) in eine n-phasige Ausgangswechselspannung (6) umzusetzen, wobei das Wechselrichtermodul (4) eine dritte High-Side-Streukapazität (41a), eine dritte Low-Side-Streukapazität (41b), eine dritte High-Side-Streuinduktivität (42a) und eine dritte Low-Side-Streuinduktivität (42b) aufweist;

   **dadurch gekennzeichnet dass**, die Differenzen mindestens zweier der ersten, zweiten oder dritten High-Side-Streukapazität (31a) zu der entsprechenden Low-Side-Streukapazität (31b) ungleich Null sind und/oder die Differenzen mindestens zweier der ersten, zweiten oder dritten High-Side-Streuinduktivität (22a, 22a', 32a, 42a) zu der entsprechenden Low-Side-Streuinduktivität (22b, 22b', 32b, 42b) ungleich Null sind; und wobei die Summe der ersten, der zweiten und der dritten High-Side-Streukapazität (21a, 31a, 41a) im Wesentlichen gleich der Summe der ersten, der zweiten und der dritten Low-Side-Streukapazität (21 b, 31 b, 41 b) ist und die Summe der ersten, der zweiten und der dritten High-Side-Streuinduktivität (22a, 22a', 32a, 42a) im Wesentlichen gleich der Summe der ersten, der zweiten und der dritten Low-Side-Streuinduktivität (22b, 22b', 32b, 42b) ist.

2. Pulswechselrichter (1) nach Anspruch 1,

   wobei die Eingangsschaltung (2) einen Zwischenkreiskondensator (7) umfasst, welcher die Eingangsgleichspannung (5) zwischen dem High-Side-Eingang (2a) und dem Low-Side-Eingang (2b) bereitstellt.

3. Pulswechselrichter (1) nach Anspruch 2,

   wobei der Zwischenkreiskondensator (7) als Folienkondensator ausgebildet ist.

4. Pulswechselrichter (1) nach Anspruch 2 oder 3,

   wobei die Busbar-Anordnung (3) in den Zwischenkreiskondensator (7) integriert ist.

5. Pulswechselrichter (1) nach einem der vorstehenden Ansprüche,

   wobei die Busbar-Anordnung (3) einen High-Side-Busbar (8a) und einen Low-Side-Busbar (8b) umfasst, wobei der High-Side-Busbar (8a) den High-Side-Eingang (2a) elektrisch mit dem High-Side-Anschluss (4a) verbindet und der Low-Side-Busbar (8b) den Low-Side-Eingang (2b) elektrisch mit dem Low-Side-Anschluss (4b) verbindet.

6. Pulswechselrichter (1) nach einem der vorstehenden Ansprüche,

   wobei das n-phasige Wechselrichtermodul (4) für jede Phase einen Brückenzweig (9, 9', 9") aufweist, welcher jeweils einen High-Side-Leistungshalbleiterschalter (10a, 10a', 10a") und einen Low-Side-Leistungshalbleiterschalter (10b, 10b', 10b") umfasst.

7. Pulswechselrichter (1) nach Anspruch 6,

   wobei die Leistungshalbleiterschalter (10a, 10a', 10a", 10b, 10b', 10b") jeweils MOSFET-Schalter oder IGBT-Schalter aufweisen.

8. Pulswechselrichter (1) nach einem der vorstehenden Ansprüche,

   wobei die Differenz der ersten High-Side-Streukapazität (21a) und der ersten Low-Side-Streukapazität (21b) und/oder die Differenz der zweiten High-Side-Streukapazität (31a) und der zweiten Low-Side-Streukapazität (31b) ein entgegengesetztes Vorzeichen zu der Differenz der dritten High-Side-Streukapazität (41a) und der dritten Low-Side-Streukapazität (41b) aufweist.

9. Pulswechselrichter (1) nach einem der vorstehenden Ansprüche,

   wobei die Differenz der ersten High-Side-Streuinduktivität (22a, 22a') und der ersten Low-Side- Streuinduktivität (22b, 22b') und/oder die Differenz der zweiten High-Side- Streuinduktivität (32a) und der zweiten Low-Side-Streuinduktivität (32b) ein entgegengesetztes Vorzeichen zu der Differenz der dritten High-Side- Streuinduktivität (42a) und der dritten Low-Side-Streuinduktivität (42b) aufweist.

10. n-phasige elektrische Maschine (10), wobei n > 1, mit einem Pulswechselrichter (1) nach einem der Ansprüche 1 bis 9, wobei die n-phasige elektrische Maschine mit der n-phasigen Ausgangswechselspannung (6) des Pulswechselrichters (1) gekoppelt ist.

**Claims**

1. Pulse inverter (1), having
   an input circuit (2) that is designed to provide an input DC voltage (5) between a high-side input (2a) and a low-side input (2b), wherein the input circuit (2) has a first high-side stray capacitance (21a), a first low-side stray capacitance (21b), a first high-side stray inductance (22a, 22a') and a first low-side stray inductance (22b, 22b');
   a busbar arrangement (3) that is designed to electrically connect the high-side input (2a) to a high-side terminal (4a) and to electrically connect the low-side input (2b) to a low-side terminal (4b),
   wherein the busbar arrangement (3) has a second high-side stray capacitance (31a), a second low-side stray capacitance (31b), a second high-side stray inductance (32a) and a second low-side stray inductance (32b); and
   an n-phase inverter module (4), n>1, which is electrically coupled to the high-side terminal (4a) and the low-side terminal (4b) and is designed to convert the input DC voltage (5) into an n-phase output AC voltage (6), wherein the inverter module (4) has a third high-side stray capacitance (41a), a third low-side stray capacitance (41b), a third high-side stray inductance (42a) and a third low-side stray inductance (42b);
   **characterized in that**
   the differences between at least two of the first, second or third high-side stray capacitance (31a) and the corresponding low-side stray capacitance (31b) are other than zero and/or the differences between at least two of the first, second or third high-side stray inductance (22a, 22a', 32a, 42a) and the corresponding low-side stray inductance (22b, 22b', 32b, 42b) are other than zero; and
   wherein the sum of the first, the second and the third high-side stray capacitance (21a, 31a, 41a) is substantially equal to the sum of the first, the second and the third low-side stray capacitance (21b, 31b, 41b) and the sum of the first, the second and the third high-side stray inductance (22a, 22a', 32a, 42a) is substantially equal to the sum of the first, the second and the third low-side stray inductance (22b, 22b', 32b, 42b) .

2. Pulse inverter (1) according to Claim 1,
   wherein the input circuit (2) comprises an intermediate circuit capacitor (7) that provides the input DC voltage (5) between the high-side input (2a) and the low-side input (2b).

3. Pulse inverter (1) according to Claim 2,
   wherein the intermediate circuit capacitor (7) is designed as a film capacitor.

4. Pulse inverter (1) according to Claim 2 or 3,
   wherein the busbar arrangement (3) is integrated into the intermediate circuit capacitor (7).

5. Pulse inverter (1) according to one of the preceding claims,
   wherein the busbar arrangement (3) comprises a high-side busbar (8a) and a low-side busbar (8b), wherein the high-side busbar (8a) electrically connects the high-side input (2a) to the high-side terminal (4a) and the low-side busbar (8b) electrically connects the low-side input (2b) to the low-side terminal (4b).

6. Pulse inverter (1) according to one of the preceding claims,
   wherein the n-phase inverter module (4) has a bridge branch (9, 9', 9") for each phase and that in each case comprises a high-side power semiconductor switch (10a, 10a', 10a") and a low-side power semiconductor switch (10b, 10b', 10b").

7. Pulse inverter (1) according to Claim 6,
   wherein the power semiconductor switches (10a, 10a', 10a'', 10b, 10b', 10b'') in each case have MOSFET switches or IGBT switches.

8. Pulse inverter (1) according to one of the preceding claims,

wherein the difference between the first high-side stray capacitance (21a) and the first low-side stray capacitance (21b) and/or the difference between the second high-side stray capacitance (31a) and the second low-side stray capacitance (31b) has a sign opposite to the difference between the third high-side stray capacitance (41a) and the third low-side stray capacitance (41b).

**9.** Pulse inverter (1) according to one of the preceding claims,
wherein the difference between the first high-side stray inductance (22a, 22a') and the first low-side stray inductance (22b, 22b') and/or the difference between the second high-side stray inductance (32a) and the second low-side stray inductance (32b) has a sign opposite to the difference between the third high-side stray inductance (42a) and the third low-side stray inductance (42b) .

**10.** n-phase electrical machine (10), wherein n > 1, having a pulse inverter (1) according to one of Claims 1 to 9, wherein the n-phase electrical machine is coupled to the n-phase output AC voltage (6) of the pulse inverter (1).

## Revendications

**1.** Onduleur à impulsions (1), comprenant
un circuit d'entrée (2) qui est conçu pour fournir une tension d'entrée continue (5) entre une entrée côté haut (2a) et une entrée côté bas (2b), dans lequel le circuit d'entrée (2) comporte une première capacité de fuite côté haut (21a), une première capacité de fuite côté bas (21b), une première inductance de fuite côté haut (22a, 22a') et une première inductance de fuite côté bas (22b, 22b') ; un agencement de barres omnibus (3) qui est conçu pour relier électriquement l'entrée côté haut (2a) à une borne côté haut (4a) et pour relier électriquement l'entrée côté bas (2b) à une borne côté bas (4b), dans lequel l'agencement de barres omnibus (3) comporte une deuxième capacité de fuite côté haut (31a), une deuxième capacité de fuite côté bas (31b), une deuxième inductance de fuite côté haut (32a) et une deuxième inductance de fuite côté bas (32b) ; et
un module onduleur à n phases (4), avec n>1, qui est électriquement couplé à la borne côté haut (4a) et à la borne côté bas (4b) et est conçu pour convertir la tension continue d'entrée (5) en une tension alternative de sortie à n phases (6), dans lequel le module onduleur (4) comporte une troisième capacité de fuite côté haut (41a), une troisième capacité de fuite côté bas (41b), une troisième inductance de fuite côté haut (42a) et une troisième inductance de fuite côté bas (42b) ;
**caractérisé en ce que** les différences entre au moins deux des première, deuxième ou troisième inductances de fuite côté haut (31a) et la capacité de fuite côté bas correspondante (31b) sont non nulles et/ou les différences entre au moins deux des première, deuxième ou troisième inductances de fuite côté haut (22a, 22a', 32a, 42a) et l'inductance de fuite côté bas correspondante (22b, 22b', 32b, 42b) sont non nulles ; et
dans lequel la somme des première, deuxième et troisième capacités de fuite côté haut (21a, 31a, 41a) est sensiblement égale à la somme des première, deuxième et troisième capacités de fuite côté bas (21b, 31b, 41b) et la somme des première, deuxième et troisième inductances de fuite côté haut (22a, 22a', 32a, 42a) est sensiblement égale à la somme des première, deuxième et troisième inductances de fuite côté bas (22b, 22b', 32b, 42b).

**2.** Onduleur à impulsions (1) selon la revendication 1,
dans lequel le circuit d'entrée (2) comprend un condensateur de circuit intermédiaire (7) qui fournit la tension continue d'entrée (5) entre l'entrée côté haut (2a) et l'entrée côté bas (2b).

**3.** Onduleur à impulsions (1) selon la revendication 2,
dans lequel le condensateur de circuit intermédiaire (7) est réalisé sous la forme d'un condensateur à film.

**4.** Onduleur à impulsions (1) selon la revendication 2 ou 3,
dans lequel l'agencement de barres omnibus (3) est intégré dans le condensateur de circuit intermédiaire (7).

**5.** Onduleur à impulsions (1) selon l'une des revendications précédentes,
dans lequel l'agencement de barres omnibus (3) comprend une barre omnibus côté haut (8a) et une barre omnibus côté bas (8b), dans lequel la barre omnibus côté haut (8a) relie électriquement l'entrée côté haut (2a) à la borne côté haut (4a) et la barre omnibus côté bas (8b) relie électriquement l'entrée côté bas (2b) à la borne côté bas (4b).

**6.** Onduleur à impulsions (1) selon l'une des revendications précédentes,
dans lequel le module onduleur à n phases (4) comporte, pour chaque phase, une branche de pontage (9, 9', 9") qui comprend respectivement un commutateur à semi-conducteurs de puissance côté haut (10a, 10a', 10a") et un commutateur à semi-conducteurs de puissance côté bas (10b, 10b', 10b").

7. Onduleur à impulsions (1) selon la revendication 6,
dans lequel les commutateurs à semi-conducteurs de puissance (10a, 10a', 10a", 10b, 10b', 10b") comportent respectivement des commutateurs MOSFET ou des commutateurs IGBT.

8. Onduleur à impulsions (1) selon l'une des revendications précédentes,
dans lequel la différence entre la première capacité de fuite côté haut (21a) et la première capacité de fuite côté bas (21b) et/ou la différence entre la deuxième capacité de fuite côté haut (31a) et la deuxième capacité de fuite côté bas (31b) présente un signe opposé à la différence entre la troisième capacité de fuite côté haut (41a) et la troisième capacité de fuite côté bas (41b).

9. Onduleur à impulsions (1) selon l'une des revendications précédentes,
dans lequel la différence entre la première inductance de fuite côté haut (22a, 22a') et la première inductance de fuite côté bas (22b, 22b') et/ou la différence entre la deuxième inductance de fuite côté haut (32a) et la deuxième inductance de fuite côté bas (32b) présente un signe opposé à la différence entre la troisième inductance de fuite côté haut (42a) et la troisième inductance de fuite côté bas (42b).

10. Machine électrique à n phases (10), dans laquelle n > 1, comprenant un onduleur à impulsions (1) selon l'une des revendications 1 à 9, dans laquelle la machine électrique à n phases est couplée à la tension alternative de sortie à n phases (6) de l'onduleur à impulsions (1).

## Fig. 1

## Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2824815 A1
- US 2012229948 A1
- US 2011292686 A1
- US 2011094075 A1

**In der Beschreibung aufgeführte Nicht-Patentliteratur**

- **FANG LUO et al.** Design of a Hybrid Busbar Filter Combining a Transmission-Line Busbar Filter and a One-Turn Inductor for DC-Fed Three-Phase Motor Drive Systems. *IEEE Transactions on Power Electronics, Institute of Electrical and Electronics Engineers,* 2013, vol. 28 (12

- **DOMURAT-LINE A. ; HOENE E.** Analysis and Reduction of Radiated EMI of Power Modules. *7th International Integrated Power Electronics Systems Conference (CIPS),* 2012